# EUROPÄISCHE PATENTSCHRIFT

(11) **EP 2 660 939 B1**
(45) Veröffentlichungstag und Bekanntmachung des Hinweises auf die Patenterteilung: **09.11.2016**
(21) Anmeldenummer: 13164882.6
(22) Anmeldetag: 23.04.2013
(51) Int. Cl.: H02G 3/06

(54) **Kabelverbindungsvorrichtung für ein Kabel**
Cable connecting apparatus for a cable
Dispositif de liaison de câble pour un câble

(30) Priorität: 04.05.2012 DE 202012101656 U
(43) Veröffentlichungstag der Anmeldung: 06.11.2013
(73) Patentinhaber: Intercontec Pfeiffer Industrie-Steckverbindungen GmbH, 94559 Niederwinkling (DE)
(72) Erfinder: Pfeiffer, Wolfgang, 74653 Künzelsau (DE)
(74) Vertreter: Hofstetter, Schurack & Partner

(56) Entgegenhaltungen:
- EP-B1- 0 704 940
- WO-A2-2011/042078
- CN-U- 201 845 915
- DE-C1- 19 824 808

## Beschreibung

Die Erfindung betrifft eine Kabelverbindungsvorrichtung für ein Kabel, mit einer ersten Verbindungshülse und einer zweiten Verbindungshülse, welche mit der ersten Verbindungshülse über eine Verbindungsstruktur verbindbar ist, wobei die Verbindungshülsen so ausgebildet sind, dass ein Kabel hindurchführbar ist.

Aus der WO 2011/042078 A2, der EP 0 704 940 B1, der DE 198 24 808 C1 und der CN 201 845 915 U sind Kabelverbindungsvorrichtungen für Kabel bekannt.

Aus dem Stand der Technik sind Kabelverschraubungen in umfänglicher Ausgestaltung bekannt. So ist beispielsweise aus der DE 103 49 781 B4 eine Kabelverschraubung mit variablem Schirmkontaktelement bekannt. Dort umfasst die Kabelverschraubung einen mit einem Gehäuse verbindbaren Stutzen und ein mit dem Stutzen verschraubbares Druckelement, das auf ein Dichtungselement im Sinne eines Anlegens des Dichtungselements an ein durch die Kabelverschraubung hindurch geführtes Kabel einwirkt. Das Druckelement und der Stutzen sind separate Teile, wobei im Inneren des Stutzens ein Schirmkontaktelement aufgenommen ist, das in einer elektrischen Verbindung mit dem Stutzen steht und mindestens einen Kontaktbügel aufweist, auf den das Druckelement im Sinne einer radial nach innen gerichteten Druckbeaufschlagung einwirkt. Der mindestens eine Kontaktbügel des Schirmkontaktelements weist ein erstes Ende auf, mit dem er an einem in das Innere des Stutzens einsetzbaren Haltering befestigt ist, und weist ein zweites Ende zur Kontaktierung eines Schirm- oder Erdungskontakts des Kabels auf. Die Kräfte zur Druckbeaufschlagung des mindestens einen Kontaktbügels wirken in einem Wirkbereich auf den mindestens einen Kontaktbügel, wobei der Wirkbereich beabstandet zu dem ersten Ende und zu dem zweiten Ende des Kontaktbügels zwischen dem ersten Ende und dem zweiten Ende liegt. Der Stutzen weist ein Abstützelement für den Wirkbereich des mindestens einen Kontaktbügels auf, welches zumindest ohne Druckbeaufschlagung des mindestens einen Kontaktbügels durch das Druckelement um eine Längsachse der Kabelverschraubung drehbar ist. Der Kontaktbügel ist auf annähernd der gesamten Länge elastisch radial nach innen verformbar.

Dieser Aufbau der Kabelverschraubung umfasst eine Vielzahl von separaten Komponenten, die im Inneren zwischen dem Stutzen und dem Druckelement angeordnet werden müssen. Gerade die Ausgestaltung eines separaten ringförmigen Abstützelements und dem dazu separat ausgebildeten Haltering, an dem dann die Kontaktbügel angeformt sind, ist im Hinblick auf das Zusammenfügen der Kabelverschraubung montageaufwändig. Darüber hinaus können auch aufgrund der komplexen Formgebung dieser Bauteile unerwünschte Positionstoleranzen auftreten, die beim Zusammenfügen des Druckelements und dem Stutzen zu unerwünschten Verformungen der Kontaktbügel führen können, wobei hier insbesondere auch Verklemmungen oder Verspreizungen gegeben sein können. Darüber hinaus kann ein ungleichmäßiges Einwirken auf die Kontaktbügel erfolgen. Aufgrund des dortigen Wirkprinzips der Kabelverschraubung beim axialen Zusammenschrauben des Druckelements mit dem Stutzen können auch unerwünschte Verkeilungen zwischen dem Abstützelement und dem Haltering auftreten. Besonders nachteilig ist auch die sehr komplexe Formgebung des Halterings, was einerseits einen erheblichen Aufwand bei der Fertigung und möglicherweise Nachbearbeitung erfordert, andererseits ein großes Unsicherheitspotential bei der axial und radial möglichst gleichmäßigen Positionierung der Kontaktbügel beinhaltet.

Darüber hinaus weist das Abstützelement an seinem zur Kontaktierung mit dem Kontaktbügel vorgesehenen Ende eine konusförmige Abschrägung auf. Auch dies ist eine dahingehend nachteilige Ausgestaltung, da somit ein relativ großer flächiger Anlagebereich an dem Wirkbereich erzeugt wird und eine möglichst punktgenaue Krafteinleitung auf den Wirkbereich zur äußerst präzisen radialen Bewegung des Kontaktbügels eingeschränkt ist.

Darüber hinaus ist durch die Ausgestaltung des Abstützelements ein radial schmäleres Bauteil im Vergleich zum Haltering gegeben, so dass in radialer Richtung Bauraum verschwendet wird. Dies kann sich gegebenenfalls auch nachteilig beim axialen Zusammenfügen der Komponenten dahingehend auswirken, dass ein kufenförmiges vorderes Ende des Kontaktbügels gegebenenfalls an dem Abstützelement unerwünscht hängen bleibt und entsprechend verbogen oder verformt wird, so dass die grundsätzliche Verbindung gegebenenfalls blockiert ist.

Es ist Aufgabe der vorliegenden Erfindung, eine Kabelverbindungsvorrichtung zu schaffen, welche im Hinblick auf separate Bauteile bauteilreduziert ausgestaltet ist und dauerhaft zuverlässige sichere Verbindung ermöglicht, insbesondere entsprechend eine elektrische Kontaktierung eines Schirm- oder Erdungskontakts des Kabels ermöglicht ist.

Diese Aufgabe wird durch eine Kabelverbindungsvorrichtung gemäß dem unabhängigen Anspruch gelöst.

Eine erfindungsgemäße Kabelverbindungsvorrichtung für ein Kabel umfasst eine erste Verbindungshülse und eine separat dazu ausgebildete zweite Verbindungshülse. Die beiden Verbindungshülsen können über eine Verbindungsstruktur verbunden werden, wobei dazu gegebenenfalls ineinander greifende Verbindungsstrukturabschnitte an den jeweiligen Verbindungshülsen ausgebildet sind. Die Verbindungsstruktur ist insbesondere zerstörungsfrei lösbar ausgebildet. Die Verbindungshülsen sind darüber hinaus so ausgebildet, dass ein Kabel hindurchführbar ist.

Ein wesentlicher Gedanke der Erfindung besteht darin, dass die Kabelverbindungsvorrichtung eine Trägerhülse als Einsatz in zumindest eine der Verbindungshülsen aufweist, an welcher eine Mehrzahl von separaten Kontaktlamellen zur elektrischen Kontaktierung eines elektrischen Leiters des Kabels befestigt ist. Dazu ist insbesondere vorgesehen, dass die Kontaktlamellen im an der Trägerhülse befestigten Zustand ortsfest dort befestigt sind. Dies bedeutet, dass eine Kontaktlamelle als Ganzes gesehen dann keine Relativbewegung zur Trägerhülse selbst mehr durchführen kann. Dies gilt auch im nicht eingesetzten Zustand der Trägerhülse in eine der Verbindungshülsen.

Durch eine derartige Ausgestaltung der Kabelverbindungsvorrichtung wird durch die ortsfeste und somit positionsstabile Anbringung der Kontaktlamellen an der Trägerhülse eine unerwünschte Positionstoleranz zwischen diesen Komponenten verhindert. Darüber hinaus wird die Bauteilanzahl, die bei der Montage der Kabelverbindungsvorrichtung in die Verbindungshülsen eingesetzt werden müssen, deutlich reduziert.

Indem eine Mehrzahl von separaten Kontaktlamellen vorgesehen ist, die individuell und einzeln in die Trägerhülse in spezifischen Positionen angeordnet sind, ist auch im Hinblick auf die elektrische Kontaktierung des Schirmoder Erdungskontakts des Kabels eine Verbesserung erreicht. Es wird hierbei nicht mehr, wie im Stand der Technik, ein einzelnes Halteelement bzw. ein Haltering, an dem dann die Kontaktbügel einstückig befestigt sind, als Ganzes relativ verschoben, wodurch ungleichmäßige Kontaktierungen auftreten können, sondern selbst dann, wenn eines der separaten Kontaktlamellen in radialer Richtung etwas weiter oder weniger weit zur Längsachse der Trägerhülse absteht, dennoch eine zuverlässige elektrische Kontaktierung erreicht, da eine individuelle separate Verformung jedes einzelnen Kontaktelements bei einer Druckeinwirkung beim Zusammenfügen der Verbindungshülsen erreicht ist.

Nicht zuletzt kann durch die Ausgestaltung einer Mehrzahl von separaten Kontaktlamellen gegebenenfalls auch ein individueller Ersatz einer Kontaktlamelle durchgeführt werden.

Vorzugsweise ist vorgesehen, dass die Kontaktlamellen in der Trägerhülse verankert sind, insbesondere eingepresst sind. Dies ist eine besonders hervorzuhebende Ausgestaltung, da somit die oben genannten Vorteile besonders zur Geltung kommen. Eine äußerst mechanisch stabile Baugruppe kann dadurch ermöglicht werden, und die Positionsfixierung zwischen der Trägerhülse und den darin verankerten Kontaktlamellen im Hinblick auf ein Vermeiden einer Relativbewegung einer Kontaktlamelle als Ganzes zu der Trägerhülse ist dadurch besonders begünstigt erreicht.

Durch eine derartige Verankerung, insbesondere Einpressung, ist auch eine besonders stabile und ineinander greifende Verbindung zwischen den Kontaktlamellen und der Trägerhülse gewährleistet.

Es ist vorgesehen, dass die Kontaktlamellen zerstörungsfrei unlösbar mit der Trägerhülse verbunden sind.

Es kann vorgesehen sein, dass die Trägerhülse an einem vorderen Ende Einführschlitze aufweist, in welche sich jeweils eine Kontaktlamelle zur Befestigung erstreckt. Bei einer derartigen Ausgestaltung ragen somit die Kontaktlamellen über das vordere Ende aus der Trägerhülse heraus und erstrecken sich über das vordere Ende in Längsrichtung der Trägerhülse nach vorne über. Dadurch wird im Hinblick auf die Befestigung kein radialer Bauraum unerwünscht verschwendet und die Positionierung der Trägerhülse und der Kontaktlamellen zueinander ist besonders vorteilhaft. Denn die Kontaktlamellen stehen dann quasi in Verlängerung des vorderen Endes der Trägerhülse entsprechend nach vorne über und können gerade durch diese Positionierung zueinander besonders vorteilhaft verankert werden. Die Verankerungsposition kann dadurch mechanisch stabil und dauerhaft auch entsprechend belastbar bereitgestellt werden.

Darüber hinaus wird durch derartige Einführschlitze auch das Einbringen der Kontaktlamellen vorteilhaft ermöglicht, da diese dann sehr zielgerichtet eingebracht werden und durch vorgeformte Einführschlitze auch keine unerwünschten Verformungen der Kontaktlamellen beim Einbringen auftreten. Darüber hinaus wird durch diese Einführschlitze sowie deren Dimensionierung auch eine sehr gleichmäßige Positionierung der Kontaktlamellen erreicht, so dass gerade im Hinblick auf die axiale Erstreckung der Kontaktlamellen eine sehr gleichmäßige Positionierung dieser zueinander erreicht werden kann. Ein zu weites oder zu wenig weites axiales Einbringen der Kontaktlamellen in die Trägerhülse ist dadurch verhindert.

Darüber hinaus wird durch derartige Einführschlitze auch ein an allen Seiten Umgreifen der Kontaktlamellen durch das Material der Trägerhülse erreicht, so dass auch hier gerade der Teil der Kontaktlamellen, der sich dann in der Trägerhülse erstreckt, weder in axialer Richtung, noch in Umlaufrichtung um die Längsachse, noch in radialer Richtung eine unerwünschte Relativbewegung zur Trägerhülse durchführen kann.

Vorzugsweise ist vorgesehen, dass die Einführschlitze über die gesamte Länge axial orientiert sind. Es kann jedoch auch vorgesehen sein, dass zumindest ein Einführschlitz im Hinblick auf seine Orientierung zur Längsachse der Trägerhülse diesbezüglich nach innen oder nach außen geneigt ausgebildet ist.

Vorzugsweise ist vorgesehen, dass sich die Kontaktlamellen über eine Länge zwischen einem Viertel und einem Drittel ihrer Gesamtlänge in die Trägerhülse hineinerstrecken. Eine derartige Ausgestaltung begünstigt die oben genannten Vorteile im Hinblick auf mechanisch stabile Positionierung einerseits und dennoch eine ausreichende verfügbare Länge der Kontaktlamellen andererseits, die sich aus der Trägerhülse heraus erstrecken und eine entsprechende Kontaktierung des Schirm- oder Erdungskontakts beim Zusammenfügen der Verbindungshülsen ermöglicht. Gerade im Hinblick auf eine spezifische gebogene Formgebung der Kontaktlamellen ist diese Befestigungslänge in der Trägerhülse vorteilhaft.

Vorzugsweise ist vorgesehen, dass die Kontaktlamellen in Umlaufrichtung um eine Längsachse der Trägerhülse äquidistant und beabstandet zueinander angeordnet sind. Gerade dadurch kann dann eine möglichst gleichmäßige Kontaktierung des elektrischen Leiters durch alle Kontaktlamellen erreicht werden. Darüber hinaus ist durch diese Anordnung auch kein unerwünschtes Gegeneinanderstoßen oder unerwünschtes Überlappen der Kontaktlamellen an ihren vorderen Enden erreicht, wenn der kontaktierte Endzustand mit dem Leiter ausgebildet ist.

Darüber hinaus wird durch diese Ausgestaltung auch die Bildung der Einführschlitze, die mechanisch stabile Positionierung und Befestigung der Kontaktlamellen in der Trägerhülse begünstigt.

Vorzugsweise ist vorgesehen, dass ein Abstand in Umlaufrichtung zwischen zwei benachbarten Kontaktlamellen an einer Stirnseite der Trägerhülse zwischen dem 0,5-fachen und dem 2-fachen einer Breite einer Kontaktlamelle entspricht. Die oben genannten Vorteile treten dadurch besonders hervor.

Es ist vorgesehen, dass sich die Kontaktlamellen bereichsweise in die Trägerhülse hineinerstrecken und über eine Stirnseite der Trägerseite nach vorne überstehen. Die dadurch erreichbaren Vorteile sind bereits oben genannt.

Es ist vorgesehen, dass an einem sich in die Trägerhülse hineinerstreckenden ersten Teil einer Kontaktlamelle eine Verankerungsstruktur ausgebildet ist. Insbesondere ist diese Verankerungsstruktur einstückig an dem ersten Teil ausgebildet.

Insbesondere ist vorgesehen, dass jede Kontaktlamelle für sich betrachtet einstückig ausgebildet ist und zumindest bereichsweise, insbesondere in dem Abschnitt bzw. dem Teil, der zur elektrischen Kontaktierung mit dem Schirm- oder Erdungskontakt vorgesehen ist, elektrisch leitend ausgebildet ist.

Vorzugsweise ist ein Kontaktelement aus Metall ausgebildet.

Besonders vorteilhaft ist die Ausgestaltung eines Kontaktelements als länglicher Streifen, der uneben gestaltet ist und eine spezifische Biegungsstruktur aufweist. Zum einen wird dadurch die ausreichende Verformungsflexibilität für den Abschnitt erreicht, der sich über die Trägerhülse frei nach außen erstreckt. Zum anderen wird dadurch jedoch im Hinblick auf die Dicke ein sehr flachbauendes Element bereit gestellt, so dass auch hier kein unerwünschter Bauraum verschwendet wird und darüber hinaus auch ein sehr gewichtsreduziertes Element gegeben ist.

Es ist vorgesehen, dass die Verankerungsstruktur an gegenüberliegenden Randkanten des ersten Teils jeweils zumindest einen Widerhaken aufweist. Durch eine derartige Ausgestaltung kann die Positionsfixierung einer Kontaktlamelle zur Trägerhülse besonders vorteilhaft erreicht werden und eine sowohl axiale als auch in Umlaufrichtung um die Längsachse der Trägerhülse gesehene Relativbewegung zur Trägerhülse verhindert werden.

Vorzugsweise ist vorgesehen, dass sich die Verankerungsstruktur in einer Ebene mit dem streifenartigen ersten Teil befindet.

Es kann jedoch auch vorgesehen sein, dass sich die Verankerungsstruktur aus einer Ebene erhebt, in welcher der streifenförmige erste Teil einer Kontaktlamelle ausgebildet ist. Die Verankerung kann somit situationsangepasst erfolgen und abhängig davon, welche mechanischen Belastungen auf die Kontaktlamellen, beispielsweise im Hinblick auf Zugbelastungen oder dergleichen, auftreten, kann diesbezüglich die jeweils geeignetste Verankerungsstruktur ausgebildet werden. Somit kann ein Widerhaken auch schräg nach außen abstehend angeordnet sein oder leicht verdrillt geformt sein.

Vorzugsweise ist vorgesehen, dass eine Kontaktlamelle streifenartig und gebogen ausgebildet ist, wobei an einen sich in die Trägerhülse hineinerstreckenden ersten Teil ein zweiter Teil anschließt, der zur Längsachse der Trägerhülse hin schräg orientiert ist, und an den zweiten Teil ein kufenartiger dritter Teil anschließt.

Es ist vorgesehen, dass an einer Innenseite einer Verbindungshülse zumindest eine Druckkante integriert ausgebildet ist, welche beim Zusammenfügen der Verbindungshülsen zweite Teile der Kontaktlamellen mechanisch kontaktiert und diese zweiten Teile radial nach innen drückt, um eine elektrisch leitende Verbindung zwischen der Verbindungshülse und dem Leiter herzustellen. Durch eine derartige integrierte und somit einstückige Ausgestaltung der Druckkante in der Verbindungshülse können auch hier unerwünschte Positionstoleranzen im Vergleich zu separat ausgebildeten Komponenten verhindert werden. Darüber hinaus kann Montageaufwand beim Zusammenfügen der Kabelverbindungsvorrichtung reduziert werden. Nicht zuletzt wird auch hier der Fertigungsaufwand reduziert, da keine mehreren separaten Bauteile gefertigt werden müssen, sondern die Verbindungshülse als ein einziges Stück gefertigt werden kann. Dies ermöglicht auch eine sehr präzise und ortsgenaue Gestaltung der Druckkante.

Es ist vorgesehen, dass die Druckkante eine einzige Druckkante ist, die um die Längsachse der Verbindungshülse umlaufend über ihre gesamte Länge auf einem gleichen axialen Abschnitt in Bezug zur Längsachse der Verbindungshülse ausgebildet ist. Durch die Druckkante wird somit eine äußerst diskrete Struktur geschaffen, die in Umlaufrichtung um die Längsachse der Verbindungshülse betrachtet nahezu linienförmig bzw. in der Schnittbetrachtung punktförmig auf die zweiten Teile der Kontaktlamellen beim axialen Zusammenfügen der Verbindungshülsen einwirkt. Dadurch kann eine äußerst ortsgenaue Krafteinleitung auf die Kontaktlamellen und ein minimaler Flächenkontakt erzeugt werden, wodurch eine äußerst präzise radiale Nachinnendrückung der Kontaktlamellen zur elektrischen Kontaktierung des Leiters erzielt werden kann. Ein großflächiges Anliegen über eine großflächige Konusfläche oder eine großflächige abgerundete Fläche, die dann großflächig an den Wirkbereichen der Kontaktlamellen anliegt, wird dadurch verhindert. Eine Kontaktierung und Krafteinwirkung auf die Kontaktlamellen an unerwünschten Stellen ist durch die vorteilhafte Ausführung der Erfindung somit auch verhindert.

Darüber hinaus wird durch eine derartige diskrete und feine Druckkante auch ein axialer längerer Verschiebungsweg beim Zusammenfügen der Verbindungshülsen an den Kontaktlamellen erreicht, so dass auch hier bei der kontinuierlichen axialen Annäherung der Verbindungshülsen ein sehr gleichmäßiges Entlangbewegen der Druckkante an den Kontaktlamellen, insbesondere deren zweiten Teile, bewirkt wird, so dass auch hier ein möglichst gleichmäßiges, radiales Nachinnendrücken der Kontaktlamellen erzielt wird.

Es kann auch vorgesehen sein, dass an der Innenseite einer Verbindungshülse mehrere separate Druckkanten ausgebildet sind, so dass, in Umlaufrichtung um die Längsachse der Verbindungshülse betrachtet, mehrere beabstandete Druckkantenabschnitte ausgebildet sind. Eine derartige Ausgestaltung kann insbesondere dann vorgesehen sein, wenn die Verbindungsstruktur der Verbindungshülsen keine Schraubverbindung ist und somit beim Verbinden der Verbindungshülse keine Relativbewegung in Umlaufrichtung um die Längsachsen der Verbindungshülsen durchgeführt wird. Beispielsweise kann dann eine derartige Verbindungsstruktur als Verrastung vorgesehen sein, bei der die beiden Verbindungshülsen zum Verbinden lediglich in axialer Richtung zueinander verschoben werden.

Diese Mehrzahl von separaten Druckkanten bzw. Druckkantenabschnitten ist dann insbesondere an den Stellen angeordnet, an denen auch jeweils Kontaktlamellen sind, so dass auch hier eine entsprechende radiale Krafteinwirkung auf die Kontaktlamellen bewirkt werden kann. In diesem Zusammenhang kann es vorteilhaft sein, dass die Trägerhülse eine spezifische Positionscodierung aufweist, so dass sie nur in bestimmter Art und Weise in eine Verbindungshülse eingesetzt werden kann, so dass dann auch die entsprechende korrespondierende mechanische Kontaktierung zwischen den Druckkanten und den jeweils zugeordneten Kontaktlamellen erreicht ist.

Die Druckkante ist durch eine diskrete Stufe mit einem radialen Plateau und einem axialen Wandabschnitt gebildet. Gerade dadurch wird im Anschluss an das radiale Plateau, in axialer Richtung betrachtet, keine unerwünschte Bauraumverengung in radialer Richtung betrachtet durchgeführt, was im Hinblick auf die Ausgestaltung der radialen Breite der Trägerhülse vorteilhaft ist. Diesbezüglich kann dann gegebenenfalls eine radial größere Dimensionierung vorgesehen sein, um beispielsweise die Verformungselastizität und/oder die Aufnahme von größeren Dichtungselementen in der Trägerhülse zu ermöglichen. Darüber hinaus wird gerade dann auch der maximale axiale Verschiebungsweg relativ zueinander zwischen den Verschiebungshülsen relativ groß ermöglicht, ohne die Verschiebungshülsen selbst in axialer Richtung größer gestalten zu müssen.

Vorzugsweise ist vorgesehen, dass eine senkrecht zur Längsachse der Verbindunghülse bemessene Lichte Weite der Druckkante größer ist, als eine senkrecht zur Längsachse der Trägerhülse bemessene Lichte Weite zwischen zwei vorderen Enden von kufenartigen dritten Teilen von zwei gegenüber liegenden Kontaktlamellen, wenn diese im von der Druckkante nicht nach innen gedrückten Grundzustand sich befinden. Da eine derartige Ausgestaltung beim Ineinanderführen und axialen Zusammenschieben der Komponenten kein unerwünschtes Anstoßen der Druckkante an der radial nach außen gebogenen Stelle des dritten Teils bewirkt, können auch hier keine unerwünschten Verbiegungen oder Verformungen der Kontaktlamellen auftreten. Auch ein unerwünschtes daran Hängenbleiben oder Verspreizen oder Verklemmen ist dadurch verhindert. Sehr gezielt kann dann beim axialen Zusammenfügen der Verbindungshülsen die Druckkante an die zweiten Teile der Kontaktlamellen herangeschoben werden und diese entsprechend präzise kontaktieren.

Vorzugsweise ist vorgesehen, dass eine senkrecht zur Längsachse der Verbindungshülse bemessene Lichte Weite der Druckkante zwischen 5% und 15% kleiner oder größer als eine senkrecht zur Längsachse der Trägerhülse bemessene Lichte Weite einer Innenkante einer Stirnseite der Trägerhülse ist. Die oben genannten Vorteile werden dadurch besonders begünstigt. Darüber hinaus ist durch eine derartige Ausgestaltung in Verbindung mit der spezifischen Schrägneigung der zweiten Teile der Kontaktlamellen eine mechanische Kontaktierung der Druckkante dieser zweiten Teile in einem Abschnitt der zweiten Teile ermöglicht, der eine besonders präzise und auch gegebenenfalls minimale und gleichmäßige radiale Nachinnenverformung der Kontaktlamellen ermöglicht. Darüber hinaus ist durch eine derartige Ausgestaltung gerade im zusammengefügten Endzustand eine Endlage der Druckkante an den zweiten Teilen der Kontaktlamellen erreicht, die in einer dem ersten Teil der Kontaktlamelle zugewandten Hälfte der zweiten Teile der Kontaktlamelle ist. In dem somit im zusammengefügten Endzustand der Kabelverbindungsvorrichtung die Druckkante relativ weit entfernt von dem mit dem elektrischen Leiter verbundenen und kontaktierten dritten Teil der Kontaktlamellen angeordnet ist, wird einerseits die mechanisch stabile Positionierung der Kontaktlamellen erzielt, andererseits jedoch keine unerwünscht hohen Kraftbeaufschlagungen auf die Kontaktstellen zwischen den Kontaktlamellen und dem Leiter bewirkt. Gerade einer auch gewissen gegebenen Möglichkeit der Relativbewegung zwischen dem Kabel und den Kontaktlamellen wird dadurch ausreichend Rechnung getragen.

Vorzugsweise ist vorgesehen, dass die Verbindungsstruktur eine Verschraubung oder Verrastung ist. Im Hinblick auf eine Verschraubung kann in diesem Zusammenhang vorgesehen sein, dass an einer Innenseite einer ersten Verbindungshülse, welche vorzugsweise diejenige Verbindungshülse ist, an deren Innenseite auch die Druckkante ausgebildet ist, ein Außengewinde ausgebildet ist, welches in ein an der Innenseite der zweiten Verbindungshülse ausgebildeten Gewinde eingreift. Bei einer derartigen Ausgestaltung umgreift dann die zweite Verbindungshülse die erste Verbindungshülse bereichsweise.

Es kann jedoch auch eine inverse Ausgestaltung im Hinblick darauf vorgesehen sein, dass die zweite Verbindungshülse ein Außengewinde und die erste Verbindungshülse ein Innengewinde aufweist.

Bei einer Verrastung kann eine Ausgestaltung vorgesehen sein, die lediglich zum axialen Verschieben zwischen den Verbindungshülsen vorgesehen ist. Insbesondere ist bei einer derartigen Ausgestaltung vorgesehen, dass eine Verbindungshülse in Umlaufrichtung betrachtet eine Mehrzahl von separaten Rastelementen aufweist, die dann in Rastaufnahmen an der anderen Verbindungshülse einrasten. Vorzugsweise ist in diesem Zusammenhang vorgesehen, dass in axialer Richtung der Verbindungshülse, die die Rastaufnahmen aufweist, die Mehrzahl derartiger Rastaufnahmen ausgebildet ist, so dass, abhängig von einem aufzunehmenden Kabel und dessen Dicke, eine mehr oder weniger zusammengeschobene und verrastete Endposition zwischen den Verbindungshülsen erzeugbar ist.

Darüber hinaus kann als Ausführungsbeispiel einer Verrastung auch eine Bajonettvorrichtung vorgesehen sein.

Vorzugsweise ist vorgesehen, dass die Trägerhülse an dem den Kontaktlamellen abgewandten Ende radial verformbar und zur Aufnahme eines Dichtungselements ausgebildet ist. Durch diese radiale Verformbarkeit kann eine besonders gut geeignete Anpressung des Dichtungselements erfolgen. Vorzugsweise umfasst dazu die Verbindungshülse, in welche die Trägerhülse mit dem den Kontaktlamellen abgewandten Ende eingesetzt wird, eine diesem abgewandten Ende zugewandte Druckfläche, die beispielsweise abgerundet oder konusförmig sein kann. Beim axialen Zusammenfügen der Verbindungshülsen werden dann automatisch die radial nach innen orientierten Verformungen des abgewandten Endes der Trägerhülse bewirkt.

Es kann vorgesehen sein, dass das abgewandte Ende der Trägerhülse durch einen in Umlaufrichtung um die Längsachse der Trägerhülse mehrfach geschlitzten Ring gebildet ist, wobei durch die Schlitze gebildete Axialstege in Umlaufrichtung um die Längsachse jeweils bereichsweise überlappend angeordnet sind, wobei die Überlappungsabschnitte verjüngt ausgebildet sind. Für eine derartige Ausgestaltung wird eine spezifische fächerartige Struktur geschaffen, die in Umlaufrichtung betrachtet quasi keine tatsächlichen Lücken zwischen den Axialstegen freilässt, wenn in radialer Richtung gesehen wird, andererseits durch die Überlappungsabschnitte und deren Formgebung jedoch keine gewünschte Radialverdickung gegenüber den nicht überlappten Abschnitten auftritt.

Ein besonders gleichmäßiges Druckbeaufschlagen der Dichtung in Umlaufrichtung um die Längsachse der Trägerhülse betrachtet kann dadurch erreicht werden.

Vorzugsweise ist vorgesehen, dass der Leiter an dem zur Kontaktierung mit den Kontaktlamellen vorgesehenen Stellen ein Befestigungsband, insbesondere aus Kupfer aufweist. Gerade dann, wenn der Leiter ein Drahtgeflecht ist, kann durch ein derartiges ringförmiges Band ein unerwünschtes Auflitzen oder sonstiges Beschädigen eines derartigen Geflechts verhindert werden. Darüber hinaus wird durch diese Ausgestaltung auch eine möglichst großflächige elektrische Kontaktierung mit den Kontaktlamellen ermöglicht, wobei durch dieses Befestigungsband auch eine dauerhaft sichere und zuverlässige sowie verschleißarme elektrische Kontaktierung erreicht ist.

Insbesondere ist der elektrische Leiter ein Schirm- oder Erdungskontakt.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ein Ausführungsbeispiel der Erfindung wird nachfolgend anhand schematischer Zeichnungen näher erläutert. Es zeigen:
- Fig. 1: eine Explosionsdarstellung eines Ausführungsbeispiels einer erfindungsgemäßen Kabelverbindungsvorrichtung;
- Fig. 2: eine perspektivische Darstellung des zusammengesetzten Zustands von Teilkomponenten der Kabelverbindungsvorrichtung gemäß Fig. 1; und
- Fig. 3: eine teilweise geschnittene Darstellung eines zusammengesetzten Zustands der Kabelverbindungsvorrichtung gemäß Fig. 1.

In den Fig. werden gleiche oder funktionsgleiche Elemente mit den gleichen Bezugszeichen versehen.

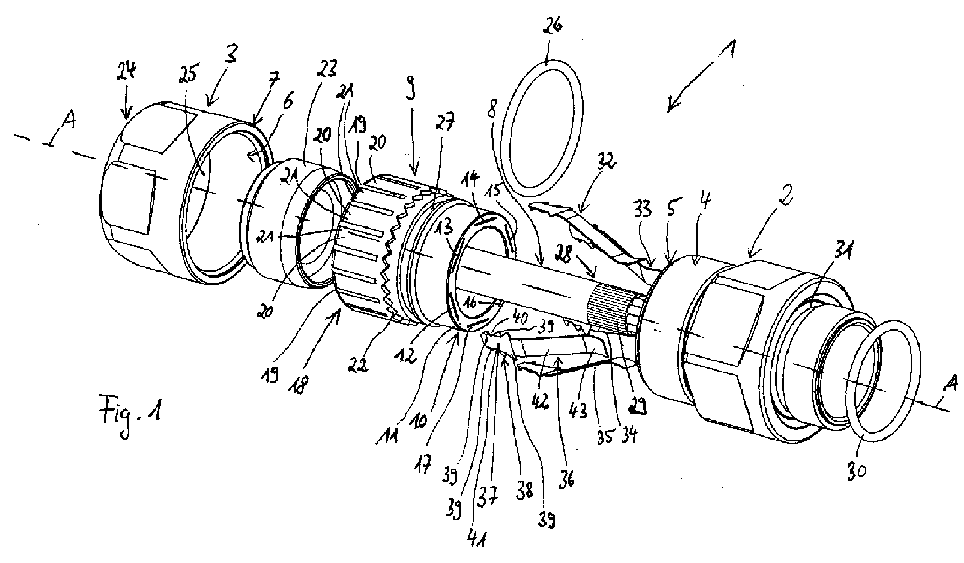

In Fig. 1 ist in einer Explosionsdarstellung eine Kabelverbindungsvorrichtung 1 gezeigt. Die Kabelverbindungsvorrichtung 1 umfasst eine erste Verbindungshülse 2 und eine separat dazu ausgebildete zweite Verbindungshülse 3. Beide Verbindungshülsen 2 und 3 sind ringförmig ausgestaltet. Zum Zusammenfügen der Verbindungshülsen 2 und 3 weist die erste Verbindungshülse 2 eine Verbindungsstruktur 4 auf, die an einer Außenseite eines vorderen Endes 5 ausgebildet ist. Darüber hinaus umfasst die zweite Verbindungshülse 3 eine Verbindungsstruktur 6, die an einer Innenseite an einem dem vorderen Ende 5 der ersten Verbindungshülse 2 zugewandten Ende 7 ausgebildet ist. Im Ausführungsbeispiel sind die Verbindungsstrukturen 4 und 6 Gewinde, so dass die Verbindungsstruktur als Verschraubung ausgebildet ist.

Darüber hinaus ist ein Kabel 8 vorgesehen, welches durch die Verbindungshülsen 2 und 3 hindurchführbar ist.

Die Kabelverbindungsvorrichtung 1 umfasst darüber hinaus eine Trägerhülse 9, die zum Einsatz ins Innere der Verbindungshülsen 2 und 3 vorgesehen ist. Die Trägerhülse 9 ist einstückig ausgebildet und aus einem elektrisch nicht leitenden Material hergestellt. Sie ist analog zu der Ausgestaltung der Verbindungshülsen 2 und 3 ringartig bzw. hohlzylinderförmig geformt. Die Trägerhülse 9 weist an einem vorderen Ende 10 eine Stirnseite 11 auf, die der ersten Verbindungshülse 2 zugewandt ist. In dieser Stirnseite 11 ist im Ausführungsbeispiel eine Mehrzahl von Einführschlitzen 12, 13, 14, 15, 16 und 17 ausgebildet. An einem der ersten Verbindungshülse 2 abgewandten Ende 18 der Trägerhülse 9 ist diese radial zu einer Längsachse A der Kabelverbindungsvorrichtung 1 reversibel verformbar ausgebildet. Die Längsachse A ist auch die Längsachse der Verbindungshülsen 2 und 3 als auch die Längsachse des Kabels 8 und die Längsachse der Trägerhülse 9.

Zur radialen Verformbarkeit ist dieses hintere Ende 18, welches auch das abgewandte Ende zu nachfolgend noch zu erläuternden Kontaktlamellen darstellt, durch einen in Umlaufrichtung um die Längsachse A der Trägerhülse 9 mehrfach geschlitzter Ring bzw. Hohlzylinder gebildet. Durch Schlitze 19, von denen der Übersichtlichkeit dienend nur einige mit dem Bezugszeichen versehen sind, werden Axialstege 20 gebildet, von denen ebenfalls der Übersichtlichkeit dienend nur einige mit dem Bezugszeichen versehen sind. Die Axialstege 20 sind in Umlaufrichtung um die Längsachse A betrachtet jeweils bereichsweise überlappend angeordnet, so dass bei radialer Betrachtung zur Längsachse A praktisch keine durchgängigen Freiräume vorhanden sind. In Überlappungsabschnitten 21 sind die Axialstege 20 verjüngt ausgebildet, so dass in diesen entsprechenden Überlappungsbereichen zwei benachbarte Überlappungsabschnitte von zwei verschiedenen Axialstegen 20 in Umlaufrichtung der Achse A betrachtet vorzugsweise jeweils eine Dicke aufweisen, die nicht dicker ist als in den nicht überlappenden Abschnitten.

Darüber hinaus ist im Anschluss an die Axialstege 20 eine Codierungsstruktur 22, beispielsweise als Zahnung ausgebildet, durch welche die spezifische Positionierung der Trägerhülse 9 in den Verbindungshülsen 2 und 3 erreicht ist, so dass keine unerwünschte Verdrehung um die Achse A auftritt.

Darüber hinaus umfasst die Kabelverbindungsvorrichtung 1 ein Dichtungselement 23, welches in das Innere der Trägerhülse 9 an dem Ende 18 einsetzbar ist. Beim Zusammenfügen der die äußeren Bauteile bildenden Verbindungshülsen 2 und 3 wird die Trägerhülse 9 dann in die zweite Verbindungshülse 3 mit dem Dichtungselement 23 eingesetzt. An der Innenseite der zweiten Verbindungshülse 3 ist an einem der ersten Verbindungshülse 2 abgewandten Ende 24 an der Innenseite eine zur Achse A hin schräg geneigte Druckfläche 25 ausgebildet, welche beim axialen Zusammenfügen der Verbindunghülsen 2 und 3 einen radialen Druck auf die Axialstege 20 erzeugt, so dass diesbezüglich dann wiederum eine entsprechende Druckbeaufschlagung auf das Dichtungselement 23 folgt, so dass das Kabel 8 entsprechend abgedichtet ist.

Die Kabelverbindungsvorrichtung 1 umfasst darüber hinaus ein weiteres Dichtungselement 26, welches als Dichtring ausgebildet ist und welches in einer Nut 27 an einer Außenseite der Trägerhülse 9 einsetzbar ist.

Das Kabel 8 umfasst einen als Schirm- oder Erdungskontakt 28 ausgebildeten elektrischen Leiter, welcher mit einem Befestigungsband 29, welches beispielsweise ein Kupferband sein kann, verbunden ist, wobei das Befestigungsband 29 zur Befestigung des Kabelschirms in Form des Schirm- oder Erdungskontakts 28 vorgesehen ist.

Darüber hinaus ist ein weiteres Dichtungselement 30 ausgebildet, welches ebenfalls als Dichtungsring ausgebildet ist und in einer Nut 31 an der Außenseite der ersten Verbindungshülse 2 anbringbar ist.

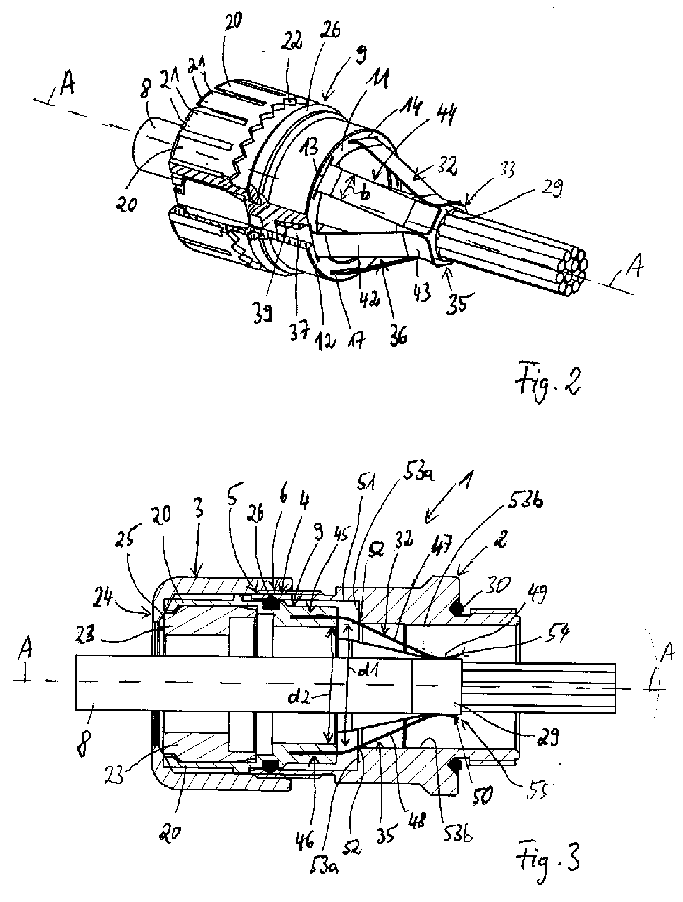

Die Kabelverbindungsvorrichtung 1 umfasst darüber hinaus eine Mehrzahl von Kontaktlamellen 32, 33, 34, 35 und 36, darüber hinaus eine weitere, der Übersichtlichkeit dienend in Fig. 1 nicht dargestellte Kontaktlamelle 44 (Fig. 2) vorgesehen ist, so dass insgesamt im Ausführungsbeispiel sechs separate und nicht miteinander verbundene Kontaktlamellen vorgesehen sind. Die Kontaktlamellen 32 bis 36, 44 sind jeweils einstückig ausgebildet und aus einem elektrisch leitenden Material.

Sie sind alle streifenförmig und gebogen ausgestaltet. Darüber hinaus sind sie alle analog zueinander ausgebildet, so dass die weitere Erläuterung anhand der Kontaktlamelle 36 erfolgt und diesbezüglich dies auch für die anderen Kontaktlamellen gilt.

Die Kontaktlamelle 36 umfasst ein erstes Teil 37, welches streifenartig ausgebildet ist und zur Einführung in den Einführschlitz 12 vorgesehen ist. Im zusammengesetzten Zustand sind die Kontaktlamellen 32 bis 36, 44 in der Trägerhülse 9 verankert, insbesondere verpresst angeordnet. Dazu ist vorgesehen, dass die Kontaktlamelle 36 an dem ersten Teil 37 eine Verankerungsstruktur 38 aufweist. Diese umfasst im Ausführungsbeispiel mehrere Widerhaken 39, die an gegenüber liegenden Randkanten 40 und 41 ausgebildet sind. Die Widerhaken 39 können in der gleichen Ebene wie das erste Teil 37 oder über diese Ebene radial überstehend ausgebildet sein.

Anschließend an den ersten Teil 37 umfasst die Kontaktlamelle 36 einen streifenförmigen zweiten Teil 42, welcher nicht axial orientiert ist, sondern ausgehend von dem ersten Teil 37 schräg geneigt zur Längsachse A hin orientiert ist. An den zweiten Teil 42 anschließend ist ein dritter Teil 43 ausgebildet, der kufenartig bzw. leicht U-förmig geformt ist.

Eine elektrische Kontaktierung zwischen den Kontaktelementen 32 bis 36, 44 mit dem Schirm- oder Erdungskontakt 28 ist im Bereich des Befestigungsbands 29 vorgesehen, wobei dazu die dritten Teile der Kontaktlamellen 32 bis 36, 44 außenseitig an diesem Befestigungsband 29 anliegen.

In Fig. 2 ist in einer perspektivischen Darstellung der zusammengesetzte Zustand der Kabelverbindungsvorrichtung 1 gezeigt, wobei hier die Verbindungshülsen 2 und 3 nicht dargestellt sind.

In Fig. 2 ist darüber hinaus auch die sechste Kontaktlamelle 44 gezeigt. Wie in der Darstellung gemäß Fig. 2 zu erkennen ist, sind die Kontaktlamellen 32 bis 36 und 44 in die Einführschlitze 12 bis 17 eingeführt und entsprechend eingepresst.

Im Ausführungsbeispiel sind die Kontaktlamellen 32 bis 36 und 44 zerstörungsfrei unlösbar in der Trägerhülse 9 verankert und darin so angeordnet, dass eine Kontaktlamelle 32 bis 36 und 44 als Ganzes für sich betrachtet nicht mehr relativ zu der Trägerhülse 9 bewegbar ist.

Insbesondere ist vorgesehen, dass eine Breite b (Fig. 2) der Kontaktlamellen 32 bis 36 und 44 über die Längen der zweiten Teile und dritten Teile unverändert bleibt.

In Fig. 3 ist eine Schnittdarstellung der Kabelverbindungsvorrichtung 1 im zusammengesetzten Zustand gezeigt. Wie dabei zu erkennen ist, erstreckt sich eine Kontaktlamelle 32 bis 36 und 44 über eine Länge zwischen einem Viertel und einem Drittel ihrer Gesamtlänge in das Innere der Trägerhülse 9 hinein.

Darüber hinaus ist zu erkennen, dass die ersten Teile der Kontaktlamellen 32 bis 36 und 44, wobei in Fig. 3 erste Teile 45 und 46 der Kontaktlamellen 32 und 35 gezeigt sind, ausschließlich axial orientiert sind. Die entsprechenden Einführschlitze sind ebenfalls nur axial ausgebildet.

Darüber hinaus sind zweite Teile 47 und 48 und dritte Teile 49 und 50 der Kontaktlamellen 32 und 35 dargestellt. Diesbezüglich ist auch der entsprechende Formverlauf zu erkennen.

Wie darüber hinaus aus der bis auf das Kabel 8 geschnittenen Darstellung in Fig. 3 zu erkennen ist, weist die erste Verbindungshülse 2 an einer Innenwand 51 gegenüber dem Ende 5 und der Verbindungsstruktur 4 nach hinten zurück versetzt eine diskrete radial nach innen gerichtete Stufe auf, so dass eine Druckkante 52 ausgebildet ist. Diese ist als geschlossene umlaufende Druckkante ausgebildet, wobei diese im Ausführungsbeispiel durch ein ausschließlich radial ausgebildetes Plateau 53a und einen axialen Wandabschnitt 53b gebildet ist. Die Druckkante 52 ist umlaufend quasi als somit dünne Linie ausgebildet, die über ihre gesamte Umlauflänge in Richtung der Längsachse A betrachtet, auf einem gleichen Achsenabschnitt und somit in axialer Richtung vollständig auf gleichem Niveau angeordnet ist.

Wie aus der Darstellung in Fig. 3 zu erkennen ist, ist eine Lichte Weite d1, die senkrecht zur Längsachse A bemessen ist, deutlich größer als ein in den Figuren nicht zu erkennender und ebenfalls senkrecht zur Längsachse A gemessener Abstand bzw. eine Lichte Weite zwischen zwei vorderen Enden 54 und 55 von dritten Teilen 49 und 50 von gegenüberliegenden Kontaktlamellen 32 und 35 ausgebildet, wenn sich diese Kontaktlamellen 32 und 33 im Grundzustand befindet, wobei sich dieser dadurch definiert, dass keinerlei radiale Druckbeaufschlagung durch die Druckkante 52 oder ein anderes Bauteil auftritt. Durch eine derartige Ausgestaltung ist es daher möglich, dass beim axialen Zusammenschieben der Bauteile die erste Verbindungshülse 2 problemlos über diese vorderen Enden 54 und 55 als auch über die analogen anderen Enden der dritten Teile der anderen Kontaktlamellen hinweggeschoben werden kann, ohne dass dadurch ein Verspreizen oder Verklemmen oder daran Hängenbleiben auftreten würde.

Eine Kontaktierung der Druckkante 52 erfolgt ausschließlich und nur im Bereich der zweiten Teile der Kontaktlamellen 32 bis 36 und 44.

Darüber hinaus ist die Lichte Weite d1 auch so bemessen, dass sie zwischen 5% und 15% kleiner oder größer als eine senkrecht zur Längsachse A bemessene Lichte Weite d2 einer Innenkante der Stirnseite 11 ist.

Wie aus der Darstellung in Fig. 3 zu erkennen ist, ist im vollständig zusammengefügten Endzustand der Kabelverbindungsvorrichtung 1 die Druckkante 52 innerhalb einer den ersten Teilen der Kontaktlamellen 32 bis 36 und 44 zugewandten Längenhälfte der zweiten Abschnitte bzw. zweiten Teile der Kontaktlamellen 32 bis 36 und 44 positioniert.

Diese Endposition der Druckkante 52 kann jedoch abhängig von dem Durchmesser des Kabels 8 variieren und gegebenenfalls auch deutlich weiter vorne und somit den dritten Teilen der Kontaktlamellen 32 bis 36 und 44 näherliegend sein. Die streifenförmigen Kontaktlamellen 32 bis 36 und 44 sind, wie aus den Darstellungen in den Figuren zu erkennen ist, auch im in der Trägerhülse 9 positionierten Endzustand beabstandet und berührungslos zueinander darin verankert.

## Patentansprüche

1. Kabelverbindungsvorrichtung (1) für ein Kabel (8), mit einer ersten Verbindungshülse (2) und einer zweiten Verbindungshülse (3), welche mit der ersten Verbindungshülse (2) über eine Verbindungsstruktur (4, 6) verbindbar ist, und die Verbindungshülsen (2, 3) so ausgebildet sind, das ein Kabel (8) hindurchführbar ist, wobei
eine Trägerhülse (9) als Einsatz in eine Verbindungshülse (2, 3) ausgebildet ist, an welcher eine Mehrzahl von separaten Kontaktlamellen (32 bis 36, 44) zur elektrischen Kontaktierung eines elektrischen Leiters (28, 29) des Kabels (8) befestigt ist, wobei
an einer Innenseite einer Verbindungshülse (2, 3) zumindest eine Druckkante (52) integriert ausgebildet ist, welche beim Zusammenfügen der Verbindungshülsen (2, 3) zweite Teile (42, 47, 48) der Kontaktlamellen (32 bis 36, 44) mechanisch kontaktiert und diese zweiten Teile (42, 47, 48) radial nach innen drückt, um eine elektrisch leitende Verbindung zwischen der Verbindungshülse (2, 3) und dem Leiter (28, 29) herzustellen,
**dadurch gekennzeichnet, dass**
die Druckkante (52) eine einzige linienförmige Druckkante ist, die um die Längsachse (A) umlaufend über ihre gesamte Länge auf einem gleichen axialen Abschnitt ausgebildet ist, und die Druckkante (52) durch eine diskrete Stufe mit einem radialen Plateau (53) und einem axialen Wandabschnitt (54) gebildet ist, und die Kontaktlamellen (32 bis 36, 44) zerstörungsfrei unlösbar mit der Trägerhülse (9) verbunden sind und sich die Kontaktlamellen (32 bis 36, 44) bereichsweise in die Trägerhülse (9) hineinerstrecken und über eine Stirnseite (11) der Trägerhülse (9) nach vorne überstehen und an einem sich in die Trägerhülse (9) hinein ersteckenden ersten Teil (37, 45, 46) einer Kontaktlamelle (32 bis 36, 44) eine Verankerungsstruktur (38) ausgebildet ist, und die Verankerungsstruktur (38) an gegenüberliegenden Randkanten (40, 41) des ersten Teils (37, 45, 46) jeweils zumindest einen Widerhaken (39) aufweist.

2. Kabelverbindungsvorrichtung (1) nach Anspruch 1,
**dadurch gekennzeichnet, dass**
die Kontaktlamellen (32 bis 36, 44) in der Trägerhülse (9) verankert sind, insbesondere eingepresst sind.

3. Kabelverbindungsvorrichtung (1) nach einem der vorhergehenden Ansprüche,
**dadurch gekennzeichnet, dass**
die Trägerhülse (9) an einem vorderen Ende (10) Einführschlitze (12 bis 17) aufweist, in welche sich jeweils eine Kontaktlamelle (32 bis 36, 44) zur Befestigung erstreckt, insbesondere die Einführschlitze (12 bis 17) über ihre gesamte Länge axial orientiert sind.

4. Kabelverbindungsvorrichtung (1) nach einem der vorhergehenden Ansprüche,
**dadurch gekennzeichnet, dass**
sich die Kontaktlamellen (32 bis 36, 44) maximal über eine Länge zwischen einem Viertel und einem Drittel ihrer Gesamtlänge in die Trägerhülse (9) hineinerstrecken und/oder die Kontaktlamellen (32 bis 36, 44) in Umlaufrichtung um eine Längsachse (A) der Trägerhülse (9) äquidistant und beabstandet zueinander angeordnet sind, insbesondere ein Abstand in Umlaufrichtung zwischen zwei benachbarten Kontaktlamellen (32 bis 36, 44) an einer Stirnseite (11) der Trägerhüise (9) zwischen dem 0,5-fachen und 2-fachen einer Breite (b) einer Kontaktlamelle (32 bis 36, 44) beträgt.

5. Kabelverbindungsvorrichtung (1) nach einem der vorhergehenden Ansprüche,
**dadurch gekennzeichnet, dass**
sich die Verankerungsstruktur (38) in einer Ebene mit dem streifenartigen ersten Teil (37, 45, 46) befindet.

6. Kabelverbindungsvorrichtung (1) nach einem der vorhergehenden Ansprüche,
**dadurch gekennzeichnet, dass**
sich die Verankerungsstruktur (38) aus einer Ebene erhebt, in welcher der streifenförmige erste Teil (37, 45, 46) ausgebildet ist.

7. Kabelverbindungsvorrichtung (1) nach einem der vorhergehenden Ansprüche,
**dadurch gekennzeichnet, dass**
eine Kontaktlamelle (32 bis 36, 44) streifenartig und gebogen ausgebildet ist, wobei an einen sich in die Trägerhülse (9) hineinerstreckenden ersten Teil (37, 45, 46) ein zweiter Teil (42, 47, 48) anschließt, der zur Längsachse (A) der Trägerhülse (9) hin schräg orientiert ist, und an den zweiten Teil (42, 47, 48) an kufenartiger dritter Teil (43, 49, 50) anschließt.

8. Kabelverbindungsvorrichtung (1) nach einem der vorhergehenden Ansprüche,
**dadurch gekennzeichnet, dass**
eine senkrecht zur Längsachse (A) der Verbindungshülse (2, 3) bemessene Lichte Weite (d1) der Druckkante (52) größer ist, als eine senkrecht zur Längsachse (A) der Trägerhülse (9) bemessene Lichte Weite zwischen zwei vorderen Enden (54, 55) von kufenartigen dritten Teilen (43, 49, 50) von zwei gegenüberliegenden Kontaktlamellen (32 bis 36, 44), wenn diese im von der Druckkante (52) nicht nach innen gedrückten Grundzustand sind.

9. Kabelverbindungsvorrichtung (1) nach einem der vorhergehenden Ansprüche
**dadurch gekennzeichnet, dass**
eine senkrecht zur Längsachse (A) der Verbindungshülse (2, 3) bemessene Lichte Weite (d1) der Druckkante (52) zwischen 5% und 15% kleiner oder größer als eine senkrecht zur Längsachse (A) der Trägerhülse (9) bemessene Lichte Weite (d2) einer Innenkante einer Stirnseite (11) der Trägerhülse (9) ist.

10. Kabelverbindungsvorrichtung (1) nach einem der vorhergehenden Ansprüche,
**dadurch gekennzeichnet, dass**
die Trägerhülse (9) an dem den Kontaktlamellen (32 bis 36, 44) abgewandten Ende (18) radial verformbar und zur Aufnahme eines Dichtungselements (23) ausgebildet ist, insbesondere das abgewandte Ende (18) durch einen in Umlaufrichtung um die Längsachse (A) der Trägerhülse (9) mehrfach geschlitzten Ring gebildet ist, wobei durch die Schlitze gebildete Axialstege (20) in Umlaufrichtung um die Längsachse (A) jeweils bereichsweise überlappend angeordnet sind, wobei Überlappungsabschnitte (21) verjüngt ausgebildet sind.

## Claims

1. Cable connector device (1) for a cable (8), comprising a first connector sleeve (2) and a second connector sleeve (3), which is connectable with the first connector sleeve (2) via a connector structure (4, 6), and the connector sleeves (2, 3) being configured in such a way that a cable (8) can be passed through, wherein
a carrier sleeve (9) is configured as insert into a connector sleeve (2, 3), at which a plurality of separate contact lamellae (32 to 36, 44) is attached for electrical contacting of an electrical conductor (28, 29) of the cable (8), wherein
at an inner surface of a contact sleeve (2, 3) at least one pressure edge (52) is configured to be integrated, which upon joining the contact sleeves (2, 3) mechanically contacts second parts (42, 47, 48) of the contact lamellae (32 to 36, 44) and presses these second parts (42, 47, 48) radially towards the inside in order to create an electrically conductive connection between the contact sleeve (2, 3) and the conductor (28, 29),
**characterized in that**
the pressure edge (52) is a single linear pressure edge, which is configured to be circumferentially extending around the longitudinal axis (A) over its entire length on a same axial section, and the pressure edge (52) is formed through a discrete step with a radial plateau (53) and an axial wall section (54), and the contact lamellae (32 to 36, 44) are connected with the carrier sleeve (9) in a non-destructive non-releasable manner and extend beyond a front surface (11) of the carrier sleeve (9) towards the front and on a first part (37, 45, 46) of a contact lamella (32 to 36, 44) extending into the carrier sleeve (9) an anchoring structure (38) is configured, and the anchoring structure (38) on opposite outer edges (40, 41) of the first part (37, 45, 46) each comprises at least one barb (39).

2. Cable connector device (1) according to claim 1,
**characterized in that**
the contact lamellae (32 to 36, 44) are anchored in the carrier sleeve (9), in particular are pressed in.

3. Cable connector device (1) according to any one of the preceding claims,
**characterized in that**
the carrier sleeve (9) on a front end (10) comprises insertion slots (12 to 17), into which one contact lamella (32 to 36, 44) each extends for fastening, in particular the insertion slots (12 to 17) are axially orientated over their entire length.

4. Cable connector device (1) according to any one of the preceding claims,
**characterized in that**
the contact lamellae (32 to 36, 44) extend maximally over a length between one quarter or one third of their overall length into the carrier sleeve (9) and/or the contact lamellae (32 to 36, 44) are arranged in circumferential direction around a longitudinal axis (A) of the carrier sleeve (9) in an equidistant manner and spaced apart from each other, in particular a distance in the circumferential direction between two adjacent contact lamellae (32 to 36, 44) on a front surface (11) of the carrier sleeve (9) amounts to 0.5 and 2 times a width (b) of a contact lamella (32 to 36, 44).

5. Cable connector device (1) according to any one of the preceding claims,
**characterized in that**
the anchoring structure (38) is situated in a plane with the strip-like first part (37, 45, 46).

6. Cable connector device (1) according to any one of the preceding claims,
**characterized in that**
the anchoring structure (38) is elevated from a plane, in which the strip-shaped first part (37, 45, 46) is configured.

7. Cable connector device (1) according to any one of the preceding claims,
**characterized in that**
a contact lamella (32 to 36, 44) is configured to be strip-like and curved, wherein to a first part (37, 45, 46) extending into the carrier sleeve (9) connects a second part (42, 47, 48), which is oriented at an angle relative to the longitudinal axis (A) of the carrier sleeve (9), and to the second part (42, 47, 48) connects a skid-like third part (43, 49, 50).

8. Cable connector device (1) according to any one of the preceding claims,
**characterized in that**
a clearance (d1) of the pressure edge (52) measured perpendicularly relative to the longitudinal axis (A) of the connector sleeve (2, 3) is larger than a clearance measured perpendicularly relative to the longitudinal axis (A) of the carrier sleeve (9) between two front ends (54, 55) of skid-like third parts (43, 49, 50) of two opposite contact lamellae (32 to 36, 44), if these are in the basic state not pressed inward by the pressure edge (52).

9. Cable connector device (1) according to any one of the preceding claims,
**characterized in that**
a clearance (d1) of the pressure edge (52) measured perpendicularly relative to the longitudinal axis (A) of the connector sleeve (2, 3) is between 5% and 15% smaller or larger than a clearance (d2) of an inner edge of a front surface (11) of the carrier sleeve (9) measured perpendicularly relative to the longitudinal axis (A) of the carrier sleeve (9).

10. Cable connector device (1) according to any one of the preceding claims,
**characterized in that**
the carrier sleeve (9) at the end (18) facing away from the contact lamellae (32 to 36, 44) is radially deformable and configured for receiving a sealing element (23), in particular the end (18) facing away is formed by a ring, which is multiply slotted in the circumferential direction around the longitudinal axis (A) of the carrier sleeve (9), wherein axial bars (20) formed by the slots in the circumferential direction around the longitudinal axis (A) are arranged each overlapping in portions, wherein overlapping sections (21) are configured to be tapered.

## Revendications

1. Dispositif de jonction de câble (1) pour un câble (8), avec un premier manchon de raccordement (2) et un second manchon de raccordement (3), lequel peut être raccordé au premier manchon de raccordement (2) par l'intermédiaire d'une structure de raccordement (4, 6) et les manchons de raccordement (2, 3) sont constitués de telle sorte qu'un câble (8) peut être inséré, moyennant quoi
un manchon formant support (9) est constitué en tant qu'insert dans un manchon de raccordement (2, 3), sur lequel est fixé une pluralité de lames de contact (32 à 36, 44) séparées, destinées à la mise en contact électrique d'un conducteur électrique (28, 29) du câble (8), moyennant quoi
sur une face interne d'un manchon de raccordement (2, 3), au moins un bord de pression (52) est constitué intégré, lequel met en contact mécaniquement, lors de l'assemblage des manchons de raccordement (2, 3), des deuxièmes parties (42, 47, 48) des lames de contact (32 à 36, 44) et appuie sur ces deuxièmes parties (42, 47, 48) radialement vers l'intérieur, pour produire une liaison électriquement conductrice entre le manchon de raccordement (2, 3) et le conducteur (28, 29),
**caractérisé en ce que**
le bord de pression (52) est un bord de pression linéaire unique, qui est constitué périphériquement autour de l'axe longitudinal (A), sur toute sa longueur, sur une section axiale identique et que le bord de pression (52) est formé par un redent discret avec un plateau radial (53) et une section de paroi axiale (54) et que les lames de contact (32 à 36, 44) sont reliées de manière non destructive et indétachable au manchon formant support (9) et que les lames de contact (32 à 36, 44) s'étendent à l'intérieur par secteurs dans le manchon formant support (9) et font saillie vers l'avant sur une face frontale (11) du manchon formant support (9) et qu'une structure d'ancrage (38) est constituée sur une première partie (37, 45, 46), s'étendant vers l'intérieur dans le manchon formant support (9) d'une lame de contact (32 à 36, 44) et que la structure d'ancrage (38) présente, sur des bords marginaux (40, 41) opposés de la première partie (37, 45, 46) respectivement au moins un ardillon (39).

2. Dispositif de jonction de câble (1) selon la revendication 1,
**caractérisé en ce que**
les lames de contact (32 à 36, 44) sont ancrées dans le manchon formant support (9), qu'elles sont en particulier enfoncées.

3. Dispositif de jonction de câble (1) selon l'une des revendications précédentes,
**caractérisé en ce que**
le manchon formant support (9) présente, à une extrémité avant (10), des fentes d'insertion (12 à 17), dans lesquelles s'étend respectivement une lame de contact (32 à 36, 44) aux fins de fixation, qu'en particulier les fentes d'insertion (12 à 17) sont orientées axialement sur toute leur longueur.

4. Dispositif de jonction de câble (1) selon l'une des revendications précédentes,
**caractérisé en ce que**
les lames de contact (32 à 36, 44) s'étendent à l'intérieur, au maximum sur une longueur entre un quart et un tiers de leur longueur totale, dans le manchon formant support (9) et / ou que les lames de contact (32 à 36, 44) sont agencées, dans le sens périphérique, autour d'un axe longitudinal (A) du manchon formant support (9), de manière équidistante et espacées les unes des autres, qu'en particulier un espace fait, dans le sens périphérique, entre deux lames de contact (32 à 36, 44) voisines, sur une face frontale (11) du manchon formant support (9), entre 0,5 fois et 2 fois une largeur (b) d'une lame de contact (32 à 36, 44).

5. Dispositif de jonction de câble (1) selon l'une des revendications précédentes,
**caractérisé en ce que**
la structure d'ancrage (38) se trouve dans un plan avec la première partie (37, 45, 46) en forme de bande.

6. Dispositif de jonction de câble (1) selon l'une des revendications précédentes,
**caractérisé en ce que**
la structure d'ancrage (38) s'élève à partir d'un plan, dans lequel est constituée la première partie (37, 45, 46) en forme de bande.

7. Dispositif de jonction de câble (1) selon l'une des revendications précédentes,
**caractérisé en ce**
**qu'**une lame de contact (32 à 36, 44) est constituée en forme de bande et courbée, moyennant quoi une deuxième partie (42, 47, 48) se raccorde à une première partie (37, 45, 46) s'étendant vers l'intérieur dans le manchon formant support (9), qui est orientée de manière oblique par rapport à l'axe longitudinal (A) du manchon formant support (9) et qu'une troisième partie (43, 49, 50) en forme de patin se raccorde à la deuxième partie (42, 47, 48).

8. Dispositif de jonction de câble (1) selon l'une des revendications précédentes,
**caractérisé en ce**
**qu'**une cote de passage (d1), mesurée verticalement par rapport à l'axe longitudinal (A) du manchon de raccordement (2, 3) du bord de pression (52) est plus grande qu'une cote de passage, mesurée verticalement par rapport à l'axe longitudinal (A) du manchon formant support (9), entre deux extrémités avant (54, 55) de troisièmes parties (43, 49, 50) en forme de patin de deux lames de contact (32 à 36, 44) opposées, lorsque celles-ci sont dans l'état initial non appuyé vers l'intérieur par le bord de pression (52).

9. Dispositif de jonction de câble (1) selon l'une des revendications précédentes,
**caractérisé en ce**
**qu'**une cote de passage (d1), mesurée verticalement par rapport à l'axe longitudinal (A) du manchon de raccordement (2, 3), du bord de pression (52) est entre 5 % et 15 % plus petite ou plus grande qu'une cote de passage (d2), mesurée verticalement par rapport à l'axe longitudinal (A) du manchon formant support (9), d'un bord intérieur d'une face frontale (11) du manchon formant support (9).

10. Dispositif de jonction de câble (1) selon l'une des revendications précédentes,
**caractérisé en ce que**
le manchon formant support (9) est déformable radialement à l'extrémité (18) tournée vers les lames de contact (32 à 36, 44) et qu'il est constitué pour loger un élément d'étanchéité (23), qu'en particulier l'extrémité tournée (18) est formée par une bague fendue plusieurs fois dans le sens périphérique autour de l'axe longitudinal (A) du manchon formant support (9), des nervures axiale (20), formées par les fentes, étant agencées chevauchantes respectivement par secteurs dans le sens périphérique autour de l'axe longitudinal (A), des sections de chevauchement (21) étant constituées de manière effilée.
